# EUROPEAN PATENT APPLICATION

(11) **EP 4 765 425 A1**
(43) Date of publication of application: **24.06.2026**
(21) Application number: 25777170.9
(22) Date of filing: 07.03.2025
(51) Int. Cl.: H01M 50/383, H01M 50/367, H01M 50/262, H01M 50/271, H01M 50/211, H01M 50/249, B60L 50/64, B60K 1/04

(54) **BATTERY PACK AND VEHICLE INCLUDING SAME**

(30) Priority: 27.03.2024 KR 20240042026
(71) Applicant: LG Energy Solution, Ltd., Seoul 07335 (KR)
(72) Inventor: LEE, Won-Kyu, Daejeon 34122 (KR); LEE, Jung-Hoon, Daejeon 34122 (KR)
(74) Representative: Plasseraud IP
(86) International application number: PCT/KR2025/099617
(87) International publication number: WO 2025/206926

(57) **Abstract**

The present disclosure relates to a battery pack mounted to a bottom of a chassis, which includes: a plurality of battery cells; a pack case configured to store the plurality of battery cells and having an upper side capable of being coupled to the chassis; and a fixing member interposed between the pack case and the chassis and configured to suppress deformation of the pack case.

## Description

### TECHNICAL FIELD

The present disclosure relates to a battery pack and, more specifically, to a battery pack with enhanced safety and a vehicle including the same.

This application is based on and claims priority from Korean Patent Application No. 10-2024-0042026, filed on March 27, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel to increase the charge/discharge capacity. Accordingly, the number of battery cells included in the battery module or pack may be set in various ways depending on the required output voltage or charge/discharge capacity.

Meanwhile, since battery cells undergo chemical reactions during charging and discharging, their performance may deteriorate if they are used at a temperature higher than an appropriate temperature, and if the heat fails to be controlled to the appropriate temperature, unexpected ignition or explosion is more likely to occur. Thus, if a thermal event such as thermal runaway occurs inside a battery pack, high-temperature gas or flames emitted from the battery cell may spread to adjacent battery modules, causing a chain reaction of explosions in the battery modules, which is very dangerous.

The battery module is configured by storing battery cells in a module frame, and the battery pack stores these battery modules in a pack case. In the prior art, high-temperature gas or flames are discharged through a venting hole provided on the top of the module frame, and are discharged to the outside of the pack case through the space between the pack case and the battery module.

However, since the shape of the pack case is deformed by the heat of the high-temperature gas or flames, the gap between the pack case and the battery module cannot be maintained, making it difficult to secure a path for the high-temperature gas or flames to be discharged to the outside of the pack case. In particular, when the pack lid forming the upper side of the pack case is thermally deformed and sags downward, the venting pass provided above the battery module may be blocked. Accordingly, the possibility of an explosion may increase due to thermal propagation to an adjacent battery module and an increase in internal pressure.

Therefore, it is necessary to develop a structure capable of securing, when a thermal runaway occurs in the battery module, a path for high-temperature gas or flames generated inside the battery module to be discharged to the outside of the battery pack, thereby preventing heat accumulation inside the battery pack.

### DISCLOSURE

### Technical Problem

The present disclosure is designed to solve the problems of the related art, and therefore the present disclosure is directed to providing a battery pack with improved safety and reliability by smoothly discharging gas or flames generated inside the battery module to the outside of the battery pack when thermal runaway occurs in the battery module.

The present disclosure is also to provide a vehicle that includes such a battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack mounted to a bottom of a chassis, which may include: a plurality of battery cells; a pack case configured to store the plurality of battery cells and having an upper side capable of being coupled to the chassis; and a fixing member interposed between the pack case and the chassis and configured to suppress deformation of the pack case.

The pack case may include a case body having an upper opening and configured to store the plurality of battery cells seated thereon, and a pack lid configured to cover the upper opening of the case body.

A venting space may be formed between the battery cell and the pack case such that venting gas generated from the battery cell flows through the venting space, and the fixing member may be configured to maintain a height of the venting space at a predetermined value or more.

The battery pack may further include a module case configured to group the plurality of battery cells and having a venting hole formed on an upper side to discharge venting gas generated therein to the outside.

at least one fixing member may be provided at a position corresponding to a central portion of the module case.

The fixing member may include a first coupling portion configured to pass through the chassis from the outside, and a second coupling portion configured to be coupled to the first coupling portion from the inside of the pack case.

The fixing member may include a compression portion provided between the pack case and the chassis and configured to at least partially surround the first coupling portion.

A plurality of fixing members may be provided, and elastic coefficients of the compression portions of at least some of the fixing members may be configured differently from each other.

The fixing member may include an insulation portion configured to at least partially surround the compression portion.

The fixing member may be configured such that one end is capable of being fixed to the chassis and such that the other end is fixed to the pack case so as to be movable in a vertical direction.

The fixing member may be configured as a spring having one end and the other end connected to the pack case and the chassis, respectively.

In another aspect of the present disclosure, there is provided a vehicle including a battery pack according to the present disclosure.

In another aspect of the present disclosure, there is provided a vehicle including: a chassis; a battery pack having a plurality of battery cells, and a pack case having an upper side coupled to the chassis and configured to store the plurality of battery cells; and a fixing member interposed between the pack case and the chassis and configured to suppress deformation of the pack case.

### Advantageous Effects

According to one aspect of the present disclosure, by providing a fixing member, formation of a minus gap due to thermal deformation of the pack lid can be suppressed. Therefore, according to the above aspect of the present disclosure, it is possible to secure a path for high-temperature gas or flames generated in the battery module to be discharged to the outside of the battery pack in the event of an abnormality in the battery module. As a result, thermal runaway propagation between battery modules can be effectively prevented or delayed, thereby ensuring the safety and reliability of the battery pack.

In addition, according to another aspect of the present disclosure, it is possible to prevent high-temperature gas or flames generated in the battery cell in the event of an abnormality in the battery module from flowing back into the battery module.

**In** addition, according to another aspect of the present disclosure, it is possible to prevent or delay events due to thermal runaway in a device equipped with a battery pack, such as fire or explosion.

**In** addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery pack according to an embodiment of the present disclosure.
FIG. 2 is an exploded perspective view of a battery pack according to an embodiment of the present disclosure.
FIG. 3 is a cross-sectional view of a battery pack according to an embodiment of the present disclosure, which may be a cross-sectional view taken along line I - I' in FIG. 1.
FIG. 4 is an enlarged view of part A in FIG. 3.
FIG. 5 is a drawing illustrating a comparative example in which a pack lid is deformed when a fixing member included in a battery pack is not provided according to an embodiment of the present disclosure.
FIG. 6 is a drawing illustrating a coupling position of a fixing member included in a battery pack according to an embodiment of the present disclosure.
FIG. 7 is an assembled perspective view of a fixing member included in a battery pack according to an embodiment of the present disclosure.
FIG. 8 is an exploded perspective view of a fixing member included in a battery pack according to an embodiment of the present disclosure.
FIG. 9 is a drawing illustrating the state in which deformation of a pack lid is suppressed when a fixing member included in a battery pack is provided according to an embodiment of the present disclosure.
FIG. 10 is a drawing illustrating a fixing member included in a battery pack according to another embodiment of the present disclosure.
FIG. 11 and FIG. 12 are drawings illustrating the state in which deformation of a pack lid is suppressed when a fixing member included in a battery pack is provided according to another embodiment of the present disclosure.
FIG. 13 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

**In** addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

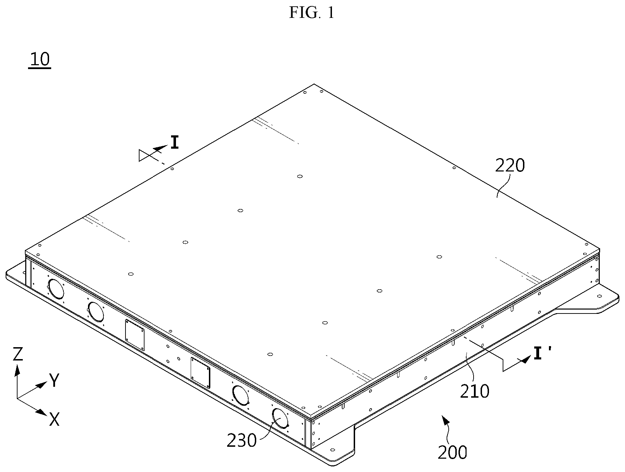

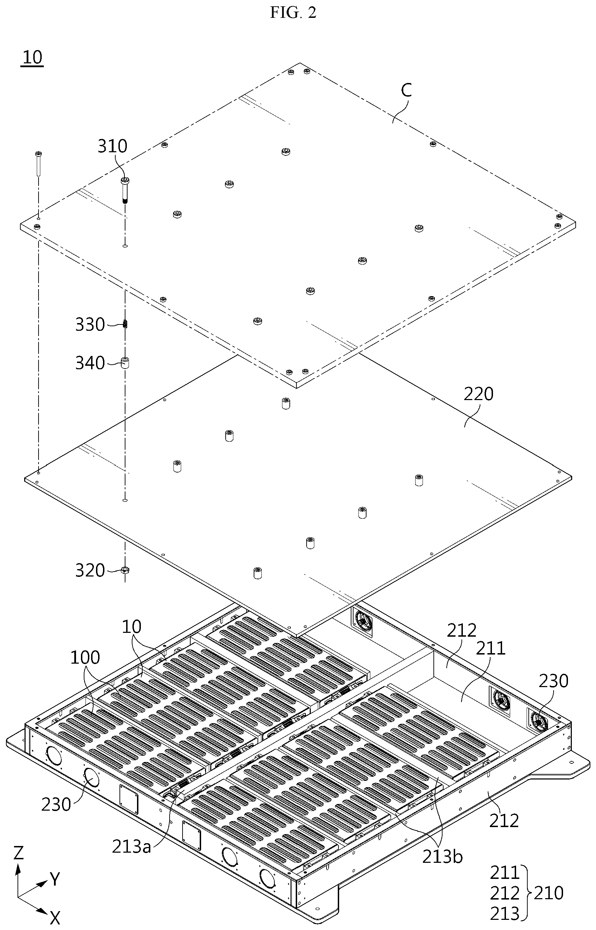

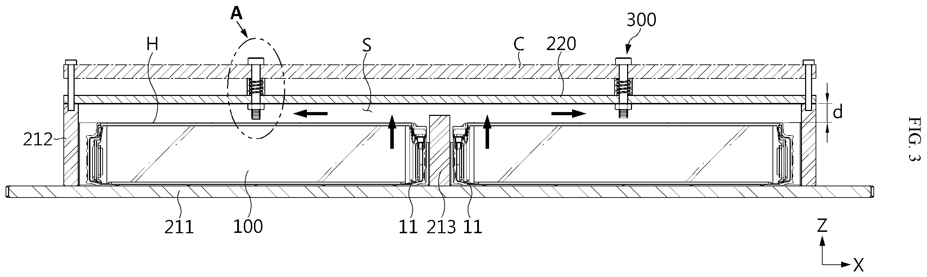

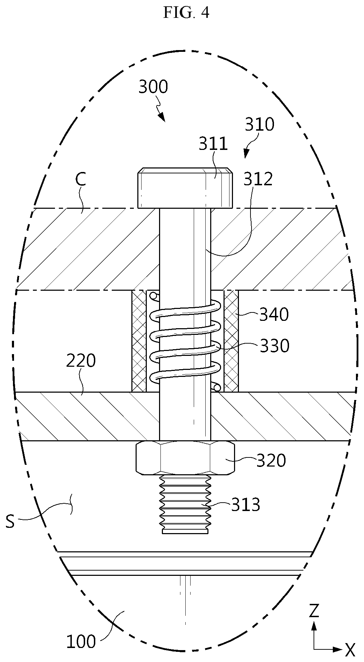

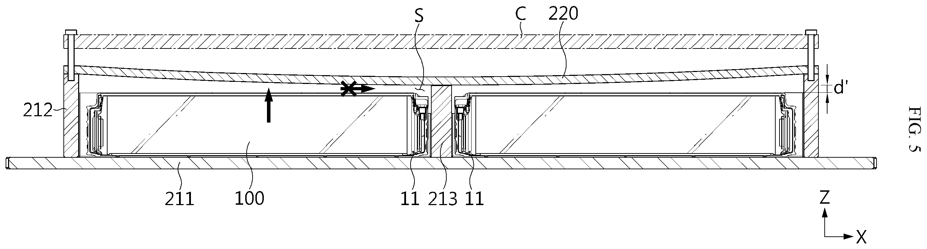

FIG. 1 is a perspective view of a battery pack according to an embodiment of the present disclosure, FIG. 2 is an exploded perspective view of a battery pack according to an embodiment of the present disclosure, and FIG. 3 is a cross-sectional view of a battery pack according to an embodiment of the present disclosure, which may be a cross-sectional view taken along line I - I' in FIG. 1. FIG. 4 is an enlarged view of part A in FIG. 3. In addition, FIG. 5 is a drawing illustrating a comparative example in which a pack lid is deformed when a fixing member included in a battery pack is not provided according to an embodiment of the present disclosure.

A battery pack 1 according to an embodiment of the present disclosure may be configured to be mounted to the bottom of a chassis C. The chassis C may be provided outside the battery pack 1. For example, the chassis C may be a frame to which the battery pack 1 is mounted in a vehicle.

In addition, referring to FIGS. 1 to 4, the battery pack 1 according to an embodiment of the present disclosure includes a battery cell 100, a pack case 200, and a fixing member 300.

Referring to FIG. 2, a plurality of battery cells 100 may be provided. In addition, although not shown in the drawing, the plurality of battery cells 100 may include an electrode assembly, a cell case that stores the electrode assembly, and an electrode lead that is connected to the electrode assembly and extends to the outside of the cell case, thereby functioning as an electrode terminal. In this case, the plurality of battery cells 100 may be electrically connected to each other.

The battery cell 100 may be a pouch-type secondary battery. The cell case of such a pouch-type secondary battery may be configured as a pouch in which a metal layer made of aluminum is interposed between polymer layers.

As illustrated in FIG. 2, the plurality of battery cells 100 may be disposed in the front-back direction (Y-axis direction) while standing in a vertical direction (Z-axis direction).

The present disclosure is not limited to a specific type or shape of the battery cell 100, and various battery cells 100 known at the time of filing the present disclosure may be applied to configure the battery pack 1 of the present disclosure. In the present embodiment, although a pouch-type secondary battery with high energy density and easy stacking will be described as shown in the drawing, it is obvious that a cylindrical or prismatic secondary battery may also be applied to the battery cell 100.

The pack case 200 may be configured to store a plurality of battery cells 100. The pack case 200 may be configured in the form of a box including a plurality of frames. The pack case 200 may be made of a material capable of securing mechanical strength, such as metal such as steel or SUS or plastic, or may include such a material in order to safely protect the battery cells 100 stored therein.

The pack case 200 may be configured to be coupled to the chassis C. In particular, the pack case 200 may be configured such that the upper part thereof is coupled to the chassis C. That is, the pack case 200 may be provided under the chassis C and configured to be coupled to the bottom of the chassis C.

Meanwhile, when thermal runaway occurs in any battery module 10 provided inside the battery pack 1, the shape of the pack case 200 may be deformed by the pressure and/or high-temperature heat of the venting gas discharged from the battery cell 100. For example, as shown in the comparative example in FIG. 5, the upper side of the pack case 200 may sag downward, thereby causing a minus gap.

In this case, as shown in FIG. 3 and FIG. 4, a fixing member 300 may be provided in the battery pack 1 according to an embodiment of the present disclosure. The fixing member 300 may be interposed between the pack case 200 and the chassis C. The fixing member 300 may be configured to connect the pack case 200 and the chassis C.

This fixing member 300 may be configured to suppress deformation of the pack case 200. In particular, the fixing member 300 may be configured to hold the upper side of the pack case 200 when the upper side of the pack case 200 is about to sag downward, thereby preventing the upper side of the pack case 200 from sagging downward to a certain level or more.

According to the above-implemented configuration of the present disclosure, the fixing member 300 may suppress the pack case 200 from being bent or deformed by pressure and/or heat such as venting gas. In particular, the upper side of the pack case 200 may be prevented from being excessively sagging due to thermal deformation.

Therefore, according to the above-implemented configuration of the present disclosure, a path may be secured for high-temperature gas or flames generated from the battery cell 100 in the event of an abnormal situation of the battery module 10 to be discharged to the outside of the battery pack 1. As a result, thermal runaway propagation may be effectively prevented or delayed inside the battery pack, thereby ensuring the safety and reliability of the battery pack 1.

In addition, according to the above-implemented configuration of the present disclosure, high-temperature gas or flames generated in the battery cell 100 may be quickly discharged to the outside of the battery pack 1, thereby preventing the high-temperature gas or flames from flowing back into the battery cell 100.

Referring to FIGS. 1 and 2, the pack case 200 may have a case body 210 and a pack lid 220.

The case body 210 may be configured to have an upper opening so that a plurality of battery cells 100 may be installed. More specifically, the case body 210 may include a base frame 211 and a side frame 212.

The base frame 211 may be configured so that a plurality of battery modules 10 may be seated thereon. The base frame 211 may form the bottom surface of the pack case 200 and may be configured in the form of a square plate. In addition, the base frame 211 may have a flat upper surface so that the module case 120 may be stably seated thereon.

The side frame 212 may extend upward from respective edges of the base frame 211. The side frame 212 may have a plurality of unit walls to surround the plurality of battery modules 10. More specifically, the plurality of side frames 220 may have a right wall located at an end of the base frame 210 to the +X-axis direction, a rear wall located at an end to the +Y-axis direction, a left wall located at an end to the -X-axis direction, and a front wall located at an end to the -Y-axis direction, respectively, to form the side surfaces of the pack case 200.

**In** addition, the pack case 200 may include a cross-beam 213. The cross-beam 213 may be configured to partition the inner space of the pack case 200. The cross-beam 213 may be configured to partition and group a plurality of battery cells 100. The cross-beam 213 may be configured to extend along the left-right direction and/or the front-back direction of the pack case 200.

**In** addition, a plurality of cross-beam 213 may be provided. The cross-beam 213 may include a main beam 213a and a sub-beam 213b. The main beam 213a and the sub-beam 213b may be disposed in a vertical direction to each other.

The main beam 213a may be configured to connect at least some of the plurality of side frames 220. For example, as illustrated in FIG. 2, the main beam 213a may be configured to extend in the front-back direction to connect the front wall and the rear wall among the side frames 220.

The sub-beam 213b may be configured to connect the side frames 212 and the main beam 213a to each other. For example, as shown in FIG. 2, the sub-beam 213b may be configured to extend in the left-right direction to connect the left wall and/or the right wall of the side frames 220 and the main beam 213a to each other. A plurality of sub-beams 213b may be provided along the front-back direction.

The pack lid 220 may be configured to cover the upper opening of the case body 210. The pack lid 220 may be provided to be coupled to the top of the side frame 212 to form the upper side of the pack case 200. In this case, the pack lid 220 may be disposed to be spaced a predetermined distance apart from the top of the cross-beam 213 and the battery cell 100 in the vertical direction (Z-axis direction).

Referring to FIG. 2, the pack case 200 may include a venting device 230. The venting device 230 may be configured to discharge gas generated from the battery cell 100 to the outside of the pack case 200.

The venting device 230 may be configured to be opened by the pressure of the venting gas when the internal pressure of the pack case 200 increases due to the venting gas generated therein, thereby discharging the venting gas to the outside of the pack case 200.

For example, the venting device 230 may be configured to be opened and closed depending on the internal pressure inside the pack case 200. Alternatively, the venting device 230 may be configured in the form of a hole. The present disclosure is not limited to a specific type or form of the venting device 230, and various venting devices 230 known at the time of filing the present disclosure may be applied to configure the battery pack 1 of the present disclosure.

Specifically, the venting device 230 may be provided on the side of the pack case 200, that is, on the side frame 220. The venting device 230 may be provided on one or more of the plurality of side frames 220. In addition, the venting device 230 may be located between the main beam 213a and the side frame 212. For example, as disclosed in the embodiment illustrated in FIG. 2, the venting device 230 may be located on the front and rear side frames 212, and may be disposed between the left and/or right side frame 212 and the main beam 213a.

A plurality of venting devices 230 may be provided. The venting devices 230 may be formed respectively on two or more side frames 220, or two or more venting devices 230 may be formed on one side frame 220.

The number or locations of the venting devices 230 described in the embodiment in FIG. 2 or the like are merely examples, and may be changed to various other numbers or locations.

As described above, since the battery cell 100 and the pack lid 220 are spaced a predetermined distance apart from each other, venting gas or flames may move into the space therebetween. That is, a venting space S may be formed in the space between the pack lid 220 and the battery cell 100. The venting space S may be configured to extend along the direction in which the venting device 230 is disposed.

In this case, as shown in FIGS. 3 and 4, the fixing member 300 may be configured to maintain the height d of the venting space S at a predetermined value or more. Here, the height d of the venting space S indicates the length in the vertical direction (Z-axis direction), and may refer to the vertical distance from the upper surface of the battery cell 100 to the lower surface of the pack lid 220. Here, the predetermined value may indicate the distance allowing venting gas or flames to move smoothly when a thermal event occurs. For example, it is preferable that the height d of the venting space S is maintained at a distance or more between the undeformed pack lid 220 and the battery cell 100 or the battery module 10, which will be described later.

In the case where the battery pack 1 is coupled to the chassis C, the chassis C may be coupled to the edge of the pack lid 220, i.e., the side frame 212. In this case, as a strong restraining force is applied to the edge of the pack lid 220, when a thermal runaway occurs inside the pack case 200, the center of the pack lid 220 is more likely to be thermally deformed by the pressure and/or heat of the venting gas.

In particular, as shown in FIG. 5 illustrating a comparative example, if the fixing member 300 is not provided, there is no structure between the top of the pack lid 220 and the chassis C, so the pack lid 220 may sag downward, thereby reducing the height d' of the venting space S. As a result, since the venting path is not sufficiently secured, the venting gas or flame may not be discharged to the outside of the battery pack 1, causing thermal runaway (see the bold arrow in FIG. 5).

However, according to an embodiment of the present disclosure, since the fixing member 300 firmly holds the upper portion of the pack lid 220, as shown in FIG. 5, the pack lid 220 may be prevented from sagging due to pressure and/or heat such as venting gas.

Accordingly, according to the above-implemented configuration of the present disclosure, since the height d of the venting space S may be maintained at a predetermined value or more, the venting gas or flame may be smoothly discharged to the outside of the battery pack 1 through the venting space S, thereby suppressing or preventing thermal runaway inside the battery pack 1. Accordingly, the safety and reliability of the battery pack 1 may be guaranteed.

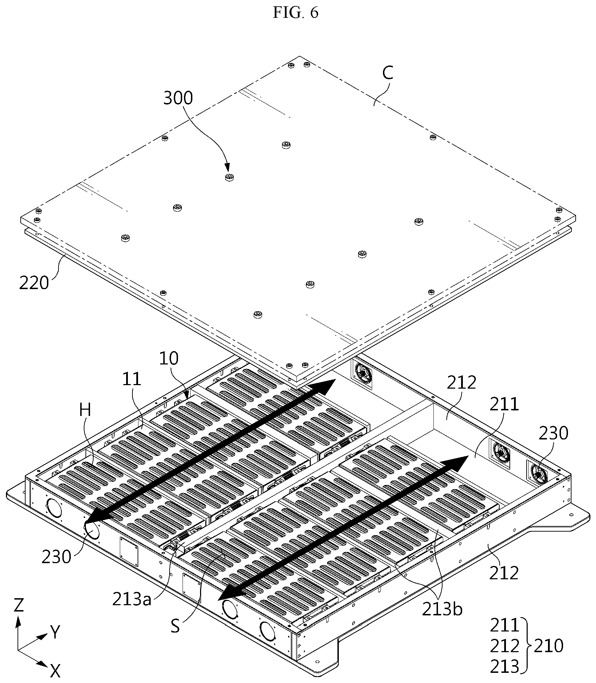

FIG. 6 is a drawing illustrating a coupling position of a fixing member included in a battery pack according to an embodiment of the present disclosure.

Referring to FIG. 6, a plurality of battery cells 100 may be modularized into one or more battery modules 10. That is, the battery pack 1 according to the present disclosure may include a plurality of battery modules 10, and a plurality of battery cells 100 included in the battery pack 1 may be divided and included in the plurality of battery modules 10. In this case, the plurality of battery cells 100 included in the battery module 10 may be electrically connected to each other.

**In** particular, the battery pack 1 according to the present disclosure may include a module case 11. The module case 11 may be configured to have an empty space formed therein and store at least some of the plurality of battery cells 100 in the inner space. In particular, the module case 11 may be configured to store the battery cells 100. That is, the module case 11 may be a boundary that groups the plurality of battery cells 100 into several battery modules 10 and physically confines the inner space of each battery module 10.

**In** addition, although not shown in the drawing, the battery module 10 may include a bus-bar assembly and/or a module terminal electrically connected to the plurality of battery cells 100 stored therein.

The plurality of battery modules 10 may be disposed adjacently in a plurality of rows along the front-back direction and/or left-right direction. For example, as shown in FIG. 6, the plurality of battery modules 10 may be arranged in four rows along the front-back direction (Y-axis direction) and in two rows along the left-right direction (X-axis direction).

The battery module 10 may include a venting hole H. The venting hole H may be configured to allow gas generated from the battery cells 100 stored inside the module case 11 to be discharged to the outside of the module case 11.

Specifically, the venting hole H may be provided in the module case 11 and configured to enable directional venting to a specific direction. The venting hole H may be provided on at least one side of the module case 11. FIG. 6 illustrates an embodiment in which a venting hole H is provided on the upper side of the module case 11. As a result, the venting gas may be directly discharged into the venting space S above the module case 11. In addition, the venting gas or flame flowing inside the venting space S may be discharged along the front-rear direction of the pack case 200 through the venting device 230.

The number or locations of the venting holes H described in the embodiment in FIG. 6 are only examples, and may be changed to other numbers or locations.

A plurality of fixing members 300 may be provided. The plurality of fixing members 300 may be disposed to be spaced apart from each other. That is, the fixing member 300 may be configured in an island manner. According to the above-implemented configuration of the present disclosure, the location of the fixing member 300 may be flexibly configured. As a result, the degree of design freedom increases, and productivity may be improved.

Furthermore, at least one fixing member 300 may be provided at a location corresponding to the central portion of the module case 11. In particular, the fixing member 300 may be provided between neighboring cross-beams 213. In particular, the fixing member 300 may be provided between neighboring sub-beams 213b. The fixing members 300 may be arranged in the front-back direction along the arrangement direction of the sub-beams 213b.

When venting gas or flames are discharged from the venting hole H, a portion of the pack lid 220 adjacent to the central portion of the battery module 10 is more likely to be thermally deformed and sag due to the heat of the venting gas or flames. Accordingly, as shown in the above-implemented configuration of the present disclosure, since the fixing member 300 is provided in the central portion of the battery module 10, the venting space S may be secured more effectively.

**In** this case, the fixing member 300 may be provided above the venting hole H in the vertical direction and between the venting holes H in the horizontal direction. According to the above-implemented configuration of the present disclosure, since the fixing member 300 is provided between the venting holes H, the venting gas or flames discharged from the venting hole H may move between the fixing members 300. Accordingly, the fixing member 300 may not interfere with the venting gas or flames moving inside the venting space S.

**In** addition, the fixing member 300 may not be provided above the main beam 213a. For example, as disclosed in the embodiment illustrated in FIG. 6, the venting space S may be divided into left and right spaces by the main beam 213a, and the venting gas or the like may be discharged to the outside of the pack case 200 through the venting devices 230 provided in the left and right spaces. In this case, deformation of the pack lid 220 may be suppressed only in portions where the fixing members 300 are provided.

Accordingly, according to the above-implemented configuration of the present disclosure, when the pack lid 220 is thermally deformed and sags downward above the main beam 213a where the fixing member 300 is not provided, the gap of the venting space S may become very narrow, so that the venting gas or flames may be suppressed from moving between the battery cell 100 or the battery module 10 beyond the cross-beam 213.

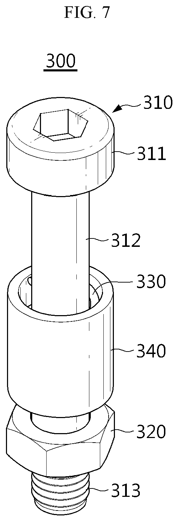

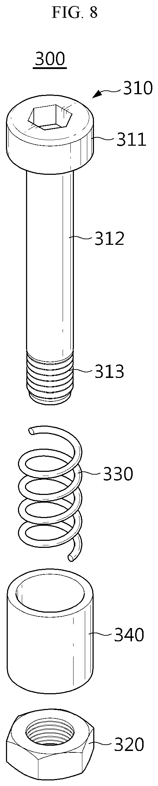

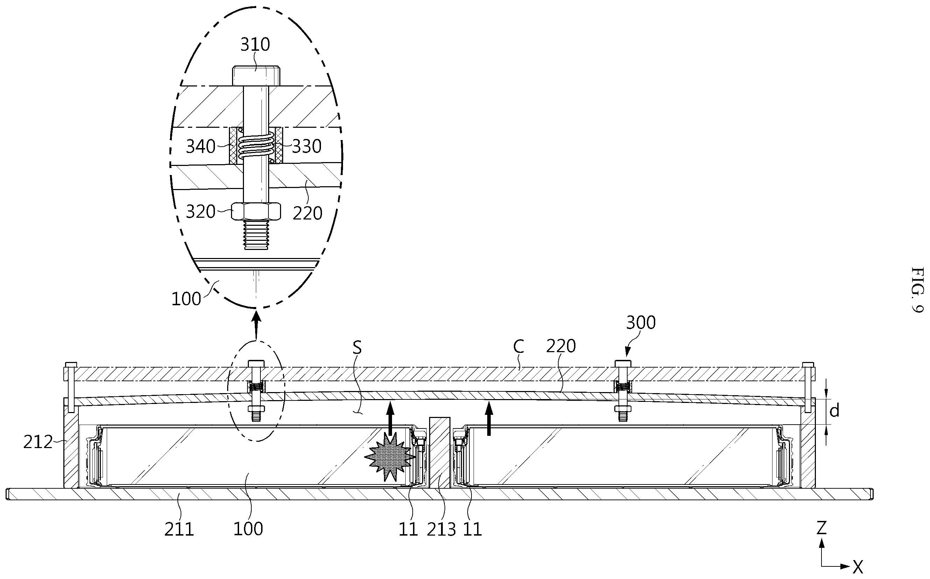

FIG. 7 is an assembled perspective view of a fixing member included in a battery pack according to an embodiment of the present disclosure, and FIG. 8 is an exploded perspective view of a fixing member included in a battery pack according to an embodiment of the present disclosure. In addition, FIG. 9 is a drawing illustrating the state in which deformation of a pack lid is suppressed when a fixing member included in a battery pack is provided according to an embodiment of the present disclosure.

The structure of the fixing member 300 will be described in detail with reference to FIGS. 7 and 8. Specifically, the fixing member 300 may include a first coupling portion 310 and a second coupling portion 320. The first coupling portion 310 and the second coupling portion 320 may be configured to be coupled to each other, thereby connecting the chassis C and the pack lid 220 to each other.

More specifically, the first coupling portion 310 may be configured to be coupled to the chassis C. The first coupling portion 310 may be configured to pass through the chassis C from the outside. The first coupling portion 310 may also be configured to pass through the pack lid 220. That is, the first coupling portion 310 may be configured to pass through both the chassis C and the pack lid 220 from the outside of the chassis C.

The first coupling portion 310 may be configured in the form of a bolt. The first coupling portion 310 may include a protrusion 311 that protrudes to the outside of the chassis C and an extension 312 that extends from the protrusion 311 toward the inside of the chassis C. In this case, it is preferable that the protrusion 311 corresponding to the bolt head is configured as a flat head rather than a round head to secure a contact area with the chassis C.

The second coupling portion 320 may be configured to be coupled to the first coupling portion 310. The second coupling portion 320 may be provided inside the pack case 200. The second coupling portion 320 may be configured in the form of a nut. That is, a tapping process may be performed on the chassis C and the pack lid 220, and the first coupling portion 310 in the shape of a bolt may be inserted thereinto and engaged with the second coupling portion 320 in the shape of a nut.

A thread 313 may be formed on the extension 312 of the first coupling portion 310. In this case, the thread 313 may be formed lower than the second coupling portion 320. Accordingly, the second coupling portion 320 may be configured not to move downward.

According to the above-implemented configuration of the present disclosure, since the coupling gap between the first coupling portion 310 and the second coupling portion 320 may be maintained at a predetermined value, the pack lid 220 may be suppressed from sagging downward. According to the above-implemented configuration of the present disclosure, since the height d of the venting space S may be maintained at a predetermined value or more, venting gas or flames may be smoothly discharged to the outside of the battery pack 1 through the venting space S, so that thermal runaway between the battery modules 10 may be suppressed or prevented. Accordingly, the safety and reliability of the battery pack 1 may be ensured.

In addition, as disclosed in the embodiment illustrated in FIG. 9, when thermal runaway occurs in the battery module 10, a portion of the pack lid 220 located above the battery module 10 may swell upward (in the direction of the bold arrow in FIG. 9) due to pressure and/or heat such as venting gas or flame. In this case, according to the above-implemented configuration of the present disclosure, since the thread 313 of the first coupling portion 310 is located lower than the second coupling portion 320, the pack lid 220 may be allowed to swell to a certain level.

That is, the fixing member 300 may suppress the minus gap of the pack lid 220 as much as possible and allow the plus gap to a certain level, thereby maintaining the height d of the venting space S at a predetermined value or more. Accordingly, according to the above-implemented configuration of the present disclosure, when thermal runaway occurs in the battery module 10 and the pack lid 220 swells upward, the venting space S may be further secured so that the venting gas or the like may be discharged more smoothly to the outside of the pack case 200.

In addition, according to the above-implemented configuration of the present disclosure, the first coupling portion 310 and the second coupling portion 320 may be more firmly coupled to each other, and the assembling efficiency may be improved when manufacturing the battery pack 1.

The fixing member 300 may further include a compression portion 330. The compression portion 330 may be configured to be compressed according to the deformation of the pack lid 220 when the pack lid 220 swells upward. In this case, the compression portion 330 may be configured to maintain the gap between the pack case 200 and the pack lid 220 at a predetermined value or more.

More specifically, the compression portion 330 may be provided between the pack case 200 and the chassis C. The compression portion 330 may include a material having elasticity. For example, the compression portion 330 may have a spring or an elastic pad.

According to the above-implemented configuration of the present disclosure, since the compression portion 330 is configured to be elastic and compressible, the pack lid 220 may be prevented from expanding and coming into contact with the chassis C. That is, according to the above-implemented configuration of the present disclosure, the pack lid 220 may be allowed to deform upward to a certain level, and the pack lid 220 may be prevented from expanding excessively and coming into contact with the chassis C by the compression portion 330.

In addition, the compression portion 330 may be configured to at least partially surround the first coupling portion 310. That is, the first coupling portion 310 may be configured to pass through the compression portion 330. According to the above-implemented configuration of the present disclosure, when the pack lid 220 swells upward, the compression portion 330 may be suppressed from being separated.

In this case, a plurality of fixing members 300 may be provided, and at least some of the fixing members 300 may be configured such that the compression portions 330 thereof have different elastic coefficients from each other. That is, the elastic coefficient of the compression portion 330 may differ depending on the position where the fixing member 300 is provided. Specifically, when the compression portion 330 has a small elastic coefficient, it may be compressed or stretched more easily than a large elastic coefficient. Accordingly, the elastic coefficient of the compression portion 330 of the fixing member 300 provided at a position where the venting space S needs to be further secured may be designed to be relatively small.

For example, the elastic coefficient of the compression portion 330 provided close to the venting device 230 may be configured to be smaller than the elastic coefficient of the compression portion 330 provided on the inside of the pack case 200. In this case, the pack lid 220 may be more easily deformed upward by the pressure of the venting gas or flames, thereby securing the venting space S.

According to the above-implemented configuration of the present disclosure, since the elastic coefficient of the compression portion 330 is configured to be different between positions, the volume of the venting space S may be configured to be different between positions. Accordingly, the venting of the venting gas or flames may be guided to a specific direction.

Referring to FIGS. 7 and 8, the fixing member 300 may further include an insulation portion 340. The insulation portion 340 may be configured to electrically insulate the compression portion 330 and prevent heat conduction or the like. To this end, the insulation portion 340 may be made of a material such as polyurethane or silicone.

This insulation portion 340 may be provided between the pack lid 220 and the chassis C. The insulation portion 340 may be provided on the outer side of the compression portion 330. The insulation portion 340 may be configured to at least partially surround the compression portion 330. In addition, the insulation portion 340 may be configured to be compressed together with the compression portion 330 when the compression portion 330 is compressed by deformation of the pack lid 220.

According to the above-implemented configuration of the present disclosure, since the insulation portion 340 is provided, the compression portion 330 may be prevented from melting or disappearing due to high heat such as a flame. Therefore, even in a situation where a flame occurs, the function of maintaining the gap between the pack lid 220 and the chassis C may be secured by the compression portion 330.

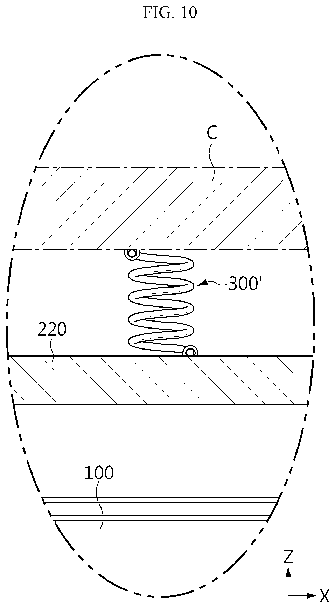

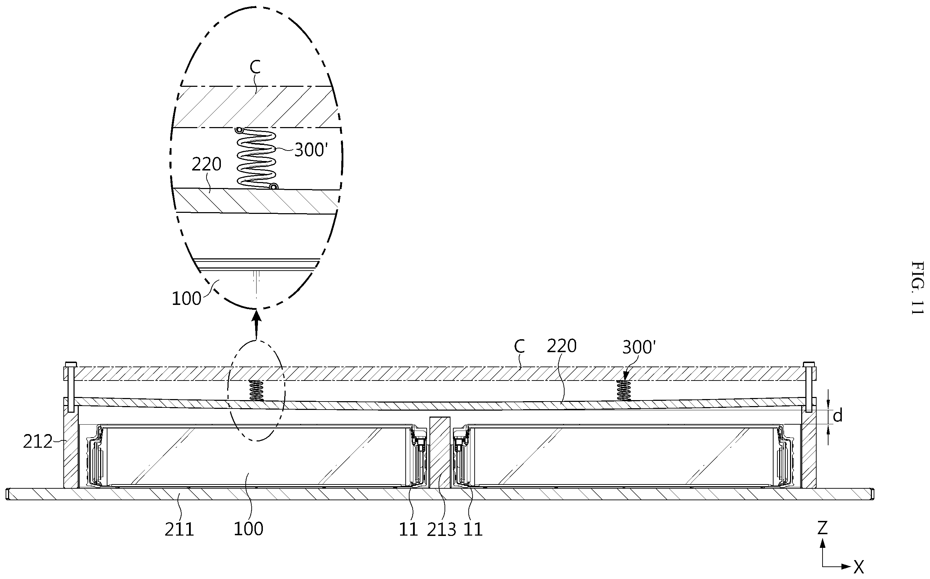

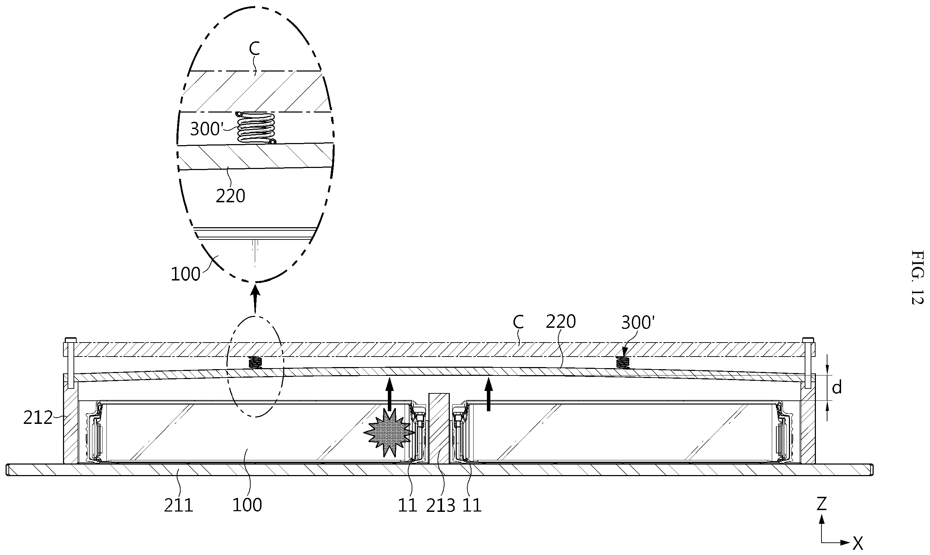

FIG. 10 is a drawing illustrating a fixing member included in a battery pack according to another embodiment of the present disclosure. In addition, FIG. 11 and FIG. 12 are drawings illustrating the state in which deformation of a pack lid is suppressed when a fixing member included in a battery pack is provided according to another embodiment of the present disclosure.

According to another embodiment of the present disclosure, a fixing member 300' may be configured such that one end is fixed to the chassis C and the other end is fixed to the pack case 200, thereby being movable in the vertical direction. The other end of the fixing member 300' may be fixed to the pack lid 220 and moved according to deformation of the pack lid 220. The fixing member 300' may be configured such that its vertical length, i.e., its height, varies.

The fixing member 300' may include a material having elasticity. For example, as disclosed in the embodiment illustrated in FIGS. 10 to 12, the fixing member 300' may be configured as a spring having one end and the other end that are connected to the pack case 200 and the chassis C, respectively. Therefore, the fixing member 300' may be configured to be compressed or stretched depending on the deformation of the pack lid 220.

According to the above-implemented configuration of the present disclosure, as disclosed in the embodiment illustrated in FIG. 11, the pack lid 220 may be suppressed from sagging downward only by the simple structure of the fixing member 300'. According to the above-implemented configuration of the present disclosure, since the height d of the venting space S may be maintained at a predetermined value or more, venting gas or flame may be smoothly discharged to the outside of the battery pack 1 through the venting space S, thereby suppressing or preventing thermal runaway between the battery modules 10. Therefore, the safety and reliability of the battery pack 1 may be guaranteed.

In addition, according to the above-implemented configuration of the present disclosure, as disclosed in the embodiment illustrated in FIG. 12, since the fixing member 300' is configured to be elastic and compressible, the pack lid 220 may be allowed to swell upward to a certain degree, thereby further securing the venting space S. Furthermore, according to the above-implemented configuration of the present disclosure, while the pack lid 220 is allowed to be deformed upward to a certain degree, the pack lid 220 may be prevented from excessively expanding and coming into contact with the chassis C by the compression portion 330.

Although not illustrated in the drawing, an insulating member may be further provided to at least partially surround the outer side of the fixing member 300'. The insulating member may be configured to be electrically insulated and prevent heat conduction.

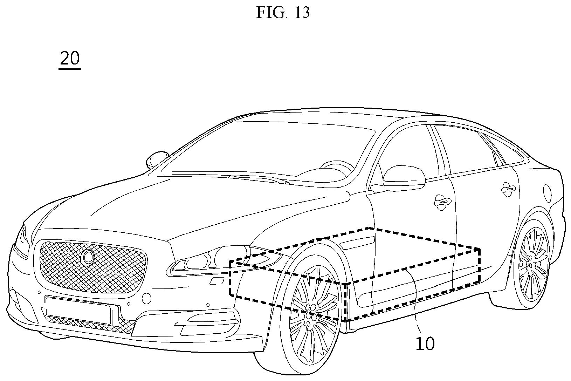

FIG. 13 is a schematic perspective view of a vehicle including a battery pack according to an embodiment of the present disclosure.

Referring to FIG. 13, a vehicle 3 according to an embodiment of the present disclosure may include one or more battery packs 1 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 operates by power supplied from the battery pack 1 according to an embodiment of the present disclosure.

The vehicle according to an embodiment of the present disclosure may include: a chassis C; a battery pack 1 having a plurality of battery cells 100, and a pack case 200 having an upper side coupled to the chassis C and configured to store the plurality of battery cells 100; and a fixing member 300 interposed between the pack case 200 and the chassis C and configured to suppress deformation of the pack case 200.

The edges of the chassis C and the pack case 200 may be fastened by bolts. In this case, when thermal runaway occurs in the battery cell 100, a strong restraining force may be applied to the edges of the pack case 200, so that the upper side of the pack case 200 may be thermally deformed. In particular, the upper side of the pack case 200 may be thermally deformed to form a minus gap, thereby reducing the size of the venting space S.

According to the above-implemented configuration of the present disclosure, since the fixing member 300 is provided, the formation of a minus gap due to thermal deformation of the upper side of the pack case 200 may be suppressed. Therefore, according to the above-described aspect of the present disclosure, it is possible to secure a path for high-temperature gas or flames generated from the battery cell 100 in the event of an abnormal situation of the battery cell 100 to be discharged to the outside of the battery pack 1. As a result, events due to thermal runaway of a device equipped with the battery pack 1, such as fire or explosion, may be prevented or delayed.

In addition, when thermal runaway occurs in the battery pack 1, a portion of the upper side of the pack case 200 may swell upward due to the pressure and/or heat of the venting gas or flame. In this case, the fixing member 300 may be configured to allow the upper side of the pack case 200 to swell to a certain level. For example, since the fixing member 300 has an elastic body such as a spring, it may be compressed in proportion to the swelling of the pack lid 220.

That is, the fixing member 300 may suppress the minus gap of the pack lid 220 and allow the plus gap to a certain level, thereby maintaining the height of the venting space S at a predetermined value or more. According to the above-mentioned implemented configuration of the present disclosure, when thermal runaway occurs inside the battery pack 1 and the pack lid 220 swells upward, the venting space S may be further secured, so that the venting gas or the like may be discharged more smoothly to the outside of the pack case 200.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery pack mounted to a bottom of a chassis, the battery pack comprising:
a plurality of battery cells;
a pack case configured to store the plurality of battery cells and having an upper side capable of being coupled to the chassis; and
a fixing member interposed between the pack case and the chassis and configured to suppress deformation of the pack case.

2. The battery pack according to claim 1,
wherein the pack case comprises
a case body having an upper opening and configured to store the plurality of battery cells seated thereon, and
a pack lid configured to cover the upper opening of the case body.

3. The battery pack according to claim 1,
wherein a venting space is formed between the battery cell and the pack case such that venting gas generated from the battery cell flows through the venting space, and
wherein the fixing member is configured to maintain a height of the venting space at a predetermined value or more.

4. The battery pack according to claim 1, further comprising
a module case configured to group the plurality of battery cells and having a venting hole formed on an upper side to discharge venting gas generated therein to the outside.

5. The battery pack according to claim 4,
wherein at least one fixing member
is provided at a position corresponding to a central portion of the module case.

6. The battery pack according to claim 1,
wherein the fixing member comprises
a first coupling portion configured to pass through the chassis from the outside, and
a second coupling portion configured to be coupled to the first coupling portion from the inside of the pack case.

7. The battery pack according to claim 6,
wherein the fixing member comprises
a compression portion provided between the pack case and the chassis and configured to at least partially surround the first coupling portion.

8. The battery pack according to claim 7,
wherein a plurality of fixing members are provided, and
wherein elastic coefficients of the compression portions of at least some of the fixing members are configured differently from each other.

9. The battery pack according to claim 7,
wherein the fixing member comprises
an insulation portion configured to at least partially surround the compression portion.

10. The battery pack according to claim 1,
wherein the fixing member
is configured such that one end is capable of being fixed to the chassis and
such that the other end is fixed to the pack case so as to be movable in a vertical direction.

11. The battery pack according to claim 1,
wherein the fixing member is configured as a spring having one end and the other end connected to the pack case and the chassis, respectively.

12. A vehicle comprising a battery pack according to any one of claims 1 to 11.

13. A vehicle comprising:
a chassis;
a battery pack having a plurality of battery cells, and a pack case having an upper side coupled to the chassis and configured to store the plurality of battery cells; and
a fixing member interposed between the pack case and the chassis and configured to suppress deformation of the pack case.
